# EUROPÄISCHE PATENTANMELDUNG

(11) **EP 1 593 985 A1**
(43) Veröffentlichungstag der Anmeldung: **09.11.2005**
(21) Anmeldenummer: 05405333.5
(22) Anmeldetag: 03.05.2005
(51) Int. Cl.: G01S 3/04, G01S 3/14, G01S 3/74, A63B 29/02, G01V 3/165, G01R 29/08

(54) **Vorrichtung zur Erkennung der Sende-Betriebsart eines Lawinenverschütteten-Suchgerätes**

(30) Priorität: 06.05.2004 CH 8042004
(71) Anmelder: Girsberger Elektronik AG, 8193 Eglisau (CH)
(72) Erfinder: Zurkich, Willy, 8196 Wil/ZH (CH); Würgler, Marcel, 8416 Flaach (CH)

(57) **Zusammenfassung**

Die Erfindung bezieht sich auf eine Vorrichtung zur Erkennung der Betriebsart Senden eines Lawinenverschütteten-Suchgerätes, welches sich in der unmittelbaren Umgebung der Vorrichtung befindet. Die Vorrichtung besteht aus mindetens einer Antenne, mindestens einem Empfänger und nachgeschalteten Mitteln zur Auswertung der empfangenen Signale und zur Entscheidung über die Veränderung des Zustandes eines Signalisationsmittels. Die Signale von mehreren Antennen werden auf geeignete Weise gemessen und kombiniert, bevor sie zur Entscheidung über die Veränderung des Zustandes des Signalisationsmittels beigezogen werden. Die Schwellwerte der Kriterien für die Entscheidung sind einstellbar.

## Beschreibung

Die Erfindung bezieht sich auf eine Vorrichtung zur Erkennung der Betriebeart Senden eines Lawinenverschütteten-Suchgerätes, welche mit Mitteln zur Erkennung des Sendesignales eines Lawinenverschütteten-Suchgeräts und mit mindestens einem Mittel zur Weitergabe der Information über das Vorhandensein eines Sendesignales versehen ist.

Tragbare Suchgeräte zur Ortung von in Lawinen verschütteten Personen, im folgenden Lawinenverschütteten-Suchgeräte oder kurz LVS genannt, gehören heute zur Grundausrüstung der Bergsteiger, Snowboarder und Skifahrer, welche sich abseits gesicherter Pisten bewegen. Derartige Geräte sind beispielsweise in den Patentschriften US6484021 und JP2003198389 beschrieben. Ein LVS befindet sich normalerweise in der Betriebsart Senden, es wird in periodischen Abständen ein kurzes Langwellen-Signal ausgesendet. Die Grenzen für den zeitlichen Abstand der Langwellen-Signal-Impulse und deren Dauer sind in den Norm EN 300 718 festgelegt. Der Abstand der Impulse ist typisch 1.0 Sekunden, die Dauer 0.1 Sekunden. Im Falle eines Lawinenniederganges können die nicht verschütteten Personen ihr LVS in einen Empfangsbetrieb umschalten. In dieser Betriebsart können die verschütteten Sender, und damit die Personen, mittels Peilverfahren geortet werden. Damit verschüttete Personen geortet werden können, muss sichergestellt sein, dass die LVS, welche sie auf sich tragen, in der Betriebsart Senden arbeiten. Wird die Einstellung der Betriebsart Senden erst im Falle eines Lawinenabganges vorgesehen, so sind damit erhebliche Unsicherheitsfaktoren verbunden, da der Benützer in diesem Falle nicht mehr in der Lage ist, kontrollierte Manipulationen vorzunehmen. Es ist daher von grossem Nutzen, wenn die Einstellung der Betriebsart Senden vor dem Betreten eines durch Lawinen gefährdeten Gebietes kontrolliert wird.

Diese Kontrolle erfolgt heute dadurch, dass ein Mitglied einer Gruppe sein LVS in die Betriebsart Empfangen versetzt und die Empfindlichkeit des Empfängers soweit reduziert, dass der Empfänger nur auf Signale von Sendern, welche sich in der unmittelbaren Umgebung des Empfängers befinden, beispielsweise in einem Abstand von einem Meter, reagiert. Dieses Verfahren weist verschiedene Nachteile auf: Mindestens ein Mitglied einer Gruppe muss an seinem LVS zusätzliche Manipulationen vornehmen. Der Benutzer, der sein Gerät in die Betriebsart Empfangen versetzt hat, muss dieses am Ende der Kontrolle aller anderen Geräte wieder in die Betriebsart Senden versetzen, und diese Manipulation kann nicht mehr kontrolliert werden. Wurde sie fehlerhaft ausgeführt, so ist nicht sichergestellt, dass auch das LVS dieses Benutzers sich in der Betriebsart Senden befindet. Es besteht damit ein Restrisiko, dass das LVS eines Benutzers sich im Falle einer Verschüttung durch eine Lawine nicht in der Betriebsart Senden befindet und dass der Verschüttete dadurch nicht geortet werden kann. Im weiteren kann dieses heute übliche Verfahren von Einzelgängern nicht angewendet werden.

Die Kontrolle der Betriebsart Senden wird zusätzlich dadurch erschwert, dass die Stärke des durch den kontrollierenden Empfänger gemessenen Signals nicht nur vom Abstand des sendenden LVS zum empfangenden LVS abhängt, sondern auch von der gegenseitigen räumlichen Ausrichtung der Antennen der beiden Geräte. Bei ungünstiger relativer räumlicher Ausrichtung der beiden Antennen kann das empfangene Signal auch bei kurzen Distanzen, beispielsweise unter einem Meter, sehr klein sein. Dadurch besteht die Gefahr einer Fehlinterpretation des Signales durch den kontrollierenden Benutzer, indem möglicherweise nicht erkannt wird, dass sich ein in der Nähe befindliches LVS in der Betriebsart Senden befindet.

Aufgabe der Erfindung ist es, bei den Zugängen zu möglicherweise durch Lawinen gefährdeten Gebieten eine Vorrichtung bereitzustellen, welche erlaubt, die Geräte aller Personen einer Gruppe auf die Einstellung der Betriebsart Senden zu überprüfen, ohne dass nach erfolgter Überprüfung an einem der LVS noch eine Manipulation vorgenommen werden muss, und welche auch erlaubt, das LVS einer einzelnen Person auf die Einstellung der Betriebsart Senden zu überprüfen, und welche diese Überprüfung unabhängig macht von der räumlichen Orientierung der sendenden LVS.

Diese Aufgabe wird dadurch gelöst, dass die Vorrichtung gemäss dieser Erfindung mit mindestens einem Empfänger ausgerüstet wird, welcher dem Empfänger eines herkömmlichen Lawinenverschütteten-Suchgerätes entspricht, und dass die Empfindlichkeit dieses Empfängers fest eingestellt ist derart, dass nur Signale von Sendern in der unmittelbaren Umgebung, beispielsweise in einem Abstand von maximal einem Meter, ausgewertet werden, und dass der Eingang dieses Empfängers mit mindestens einer Antenne verbunden ist, oder im Falle der Verwendung von mehreren Antennen mit Antennen, welche zueinander in einer bestimmten räumlichen Orientierung, vorzugsweise rechtwinklig, angeordnet sind, derart, dass von mindestens einer der Antennen ein Signal an den Eingang des Empfängers gelangt, welches genügend stark ist zur sicheren Erkennung eines Senders, welcher sich in der unmittelbaren Umgebung des Empfängers befindet, und dass das Ausgangssignal dieses Empfängers einer Auswerteeinrichtung zugeführt wird, welche das Signal in seiner Amplidute ausmisst und das Messresultat einer Schwellwertschaltung zuführt, welche über das Vorhandensein eines Senders entscheidet, und über eine Ausgabeeinheit den Zustand eines Signalisierungsmittels beeinflusst.

In einer weiteren Ausführung der Lösung wird das Signal von jeder Antenne einem einzelnen Empfänger zugeführt, und die Ausgangssignale dieser Empfänger werden nachträglich durch die Auswerteeinrichtung zu einem einzigen Signal vereinigt.

Weitere Ausgestaltungen der Erfindung ergeben sich aus den Unteransprüchen.

Für die Verbindung der Antennen mit dem Empfänger oder mit den Empfängern sind mehrere Ausführungen möglich.

In einer ersten Ausführung werden die Signale von allen Antennen dauernd zusammengeschaltet und gemeinsam einem einzelnen Empfänger zugeführt. Im Falle der Anwendung von Antennen, welche als Spule mit Ferritkern ausgeführt sind, besteht zwischen den Signalen von zwei Antennen in Abhängigkeit von der Richtung des empfangenen Magnetfeldes relativ zur Normalen der Windungsebene eine Phasenverschiebung von 0° oder 180°. Bei der Ausführung dieser Zusammenschaltung als einfache Addition besteht die Möglichkeit, dass die Signale von zwei Antennen die gleiche Amplitude aufweisen und in der Phasenlage einen Unterschied von genau 180°. In diesem Falle löschen sich die beiden Signale gegenseitig aus, und dadurch entspricht das Resultat der Zusammenschaltung nicht der Summe der einzelnen Signale von den verschiedenen Antennen. Bei Konfigurationen mit maximal drei Antennen kann dieser Effekt dadurch vermieden werden, dass die Signale von den einzelnen Antennen mit einer zusätzlichen Phasenverschiebung beaufschlagt werden, bevor sie addiert werden, beispielsweise mit einer Verschiebung um 0° für die erste Antenne, mit einer Verschiebung von 60° für eine zweite Antenne und mit einer Verschiebung von 120° für eine dritte Antenne. Dadurch wird allerdings auch der Maximalbetrag der Summe aller Signale, welche der Auswerteeinrichtung zur Verfügung steht, kleiner als die vektorielle Summe der im Falle von rechtwinklig zueinander angeordneten Antennen orthogonalen Vektoren der Amplituden der einzelnen Signale.

In einer zweiten Ausführung werden die Signale von den Antennen zeitlich versetzt einzeln dem Empfänger zugeführt. Die nachfolgende Auswerteeinheit kann sie dadurch einzeln bezüglich ihrer Amplitude ausmessen und die Messresultate addieren zu einem resultierenden Signal, welches ein Mass für die richtungsunabhängige Stärke des Signales vom Sender darstellt. Da die Dauer der Sendeimpulse von LVS-Sendern durch die Norm EN 300 718 auf maximal 0.3 Sekunden beschränkt ist und typischerweise nur 0.1 Sekunden beträgt, steht für die Auswertung des Signales von einer einzelnen Antenne nur sehr wenig Zeit zur Verfügung, was wiederum die Genauigkeit der Messung negativ beeinflusst. Die zur Verfügung stehende Zeit wird weiter verkürzt dadurch, dass nach jedem Umschaltevorgang eine gewisse Zeit gewartet werden muss, bevor das Signal der neu angeschalteten Antenne ausgemessen werden kann, da die Umschaltung der Antenne selbst Störsignale erzeugt, welche stärker sein können als das Nutzsignal vom sendenden LVS, und welche zuerst abklingen müssen.

In einer dritten Ausführung werden die Signale der einzelnen Antennen je einem eigenen Empfänger zugefürt, welcher an seinem Ausgang ein Signal zur Verfügung stellt, welches proportional ist zur Amplitude des Signales, welches von der zugeordneten Antenne empfangen wurde. Werden diese Signale von den einzelnen Empfängern wiederum addiert durch die Auswerteeinheit, so stellt das Resultat ein Abbild der Stärke des Sendesignales dar. Damit kann in der Auswerteeinrichtung ein optimales Resultat erreicht werden. Diese dritte Ausführung beinhaltet den Nachteil, dass drei Empfänger verwendet werden müssen.

Weitere Unterschiede in der Ausführung ergeben sich durch die Möglichkeit, die Signale von mehreren Antennen linear oder aufgrund der bekannten gegenseitigen räumlichen Ausrichtung der Antennen vektoriell zu addieren. Eine lineare Addition ist einfacher auszuführen, beispielsweise mittels eines Operationsverstärkers, welcher in bekannter Weise als Summator beschaltet ist, ihr Resultat entspricht aber nicht der korrekten räumlichen Summe der gemessenen Einzelsignale. Es ist aber als Annäherung für die Zwecke einer Vorrichtung gemäss dieser Erfindung durchaus brauchbar. Eine vektorielle Addition erfordert die Durchführung von Operationen zur Quadrierung von Messwerten und zur Ziehung der Quadratwurzel. Diese Operationen sind mit analogen Schaltungsmitteln nur sehr aufwendig realisierbar, mit digitalen Mitteln, beispielsweise einem Rechner, aber vergleichsweise einfach durchzuführen, indem beispielsweise vorberechnete Tabellen verwendet werden.

Die Erfindung wird nachfolgend anhand von Ausführungsbeispielen näher erläutert. In der Zeichnung zeigen:
- Figur 1:: Ein Blockschaltbild einer Vorrichtung, welche mit drei orthogonalen Antennen, mit Phasenschiebern unterschiedlicher Laufzeit, mit einem Addiererer für die phasenverschobenen Signale der einzelnen Antennen, einem Empfänger, einer Auswerteeinrichtung und einer Schwellwertschaltung versehen ist.
- Figur 2:: Ein Blockschaltbild einer Vorrichtung, welche mit drei orthogonalen Antennen, mit einer Umschaltvorrichtung für die Auswahl des Signales von einer Antenne, einem Empfänger, einer Auswerteeinrichtung und einer Schwellwertschaltung versehen ist.
- Figur 3:: Ein Blockschaltbild einer Vorrichtung, welche mit drei orthogonalen Antennen, mit drei Empfängern, einer Auswerteeinrichtung und einer Schwellwertschaltung versehen ist.

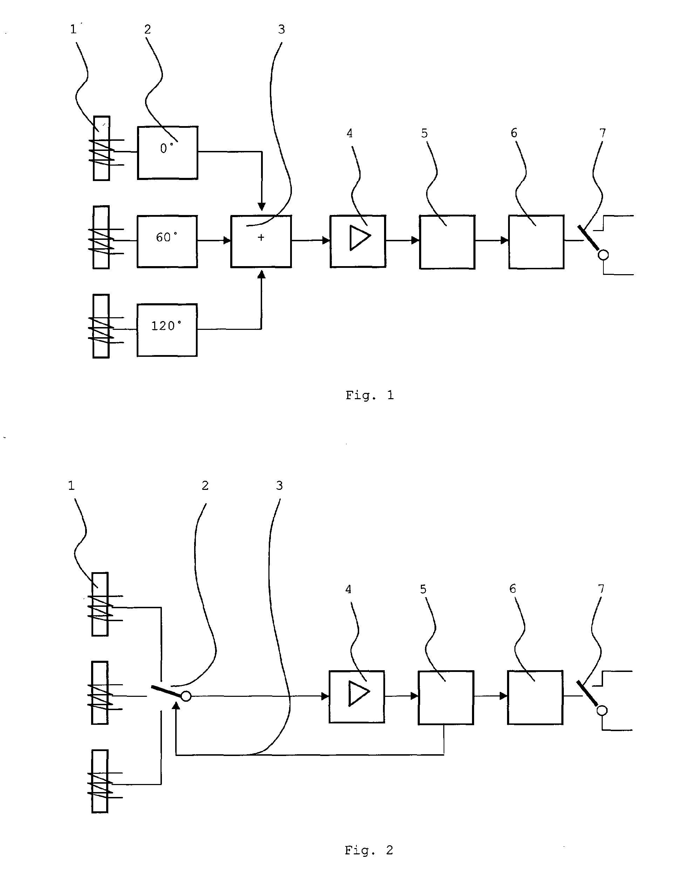

In einer ersten Ausführung gemäss Figur 1 werden die Signale von den verschiedenen Antennen 1 mittels Phasenschiebern 2 um einen bestimmten Winkel phasenverschoben. Netzwerke zur Erzielung einer Phasenverschiebung sind aus der Theorie der Filter bekannt, und zur genauen Dimensionierung sind Computer ― Programme verfügbar. Die drei phasenverschobenen Signale werden durch den Addierer 3 addiert, welcher beispielsweise als Operationsverstärker, welcher als Summator beschaltet ist, ausgeführt ist. Die Summe der drei Signale wird dem Empfänger 4 zugeführt. Dieser Empfänger selektioniert mittels von Bandpass-Filtern die gewünschten Signale von einem LVS, welches sich in der Betriebsart Senden befindet, und er verstärkt die Signale soweit, wie dies für die Auswertung durch die nachfolgende Auswerteeinheit 5 notwendig ist. Die Verstärkung des Empfängers wird so eingestellt, dass nur Signale von Sendern, welche sich in der unmittelbaren Umgebung, beispielsweise innerhalb eines Meters, der Vorrichtung befinden, durch die Auswerteeinheit verarbeitet werden können. Die Auswerteeinheit 5 misst die Amplitude des Signales vom Empfänger. Die Schwellwertschaltung 6 vergleicht die gemessene Amplitude mit einer einstellbaren Schwelle. Als Schwellwertschaltung wird beispielsweise eine Schmitt-TriggerSchaltung verwendet. Wird die eingestellte Schwelle überschritten, so wird über ein Ausgabemittel 7, beispielsweise über einen Kontakt, der Zustand eines Signalisierungsmittels verändert. Bekannte Signalisierungsmittel sind akustische Signalgeber, optische Drehleuchten oder andere Anzeigen. Um einzelne Störsignale auszuschliessen, kann auch mittels einer Zähleinrichtung innerhalb der Schwellwertschaltung festgestellt werden, wieviel mal der Schwellwert innerhalb eines vorgegebenen Zeitabschnittes überschritten wurde. Die Veränderung des Zustandes des Signalisierungsmittels erfolgt in diesem Falle erst, wenn die Anzahl der Überschreitungen einen vorgegebenen Grenzwert übersteigt.

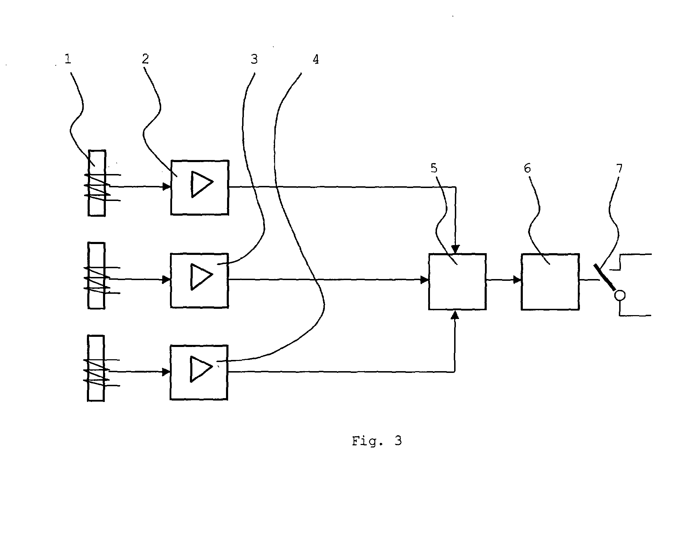

In einer zweiten Ausführung gemäss Figur 2 werden die Signale vom mehreren Antennen 1 in zeitlich gestaffelter Folge dem Empfänger 4 zugeführt. Die Auswahl erfolgt mittels eines Schalters 2, welcher mittels einer Steuerleitung 3 durch die Auswerteschaltung 5 kontrolliert wird. Die Ansteuerung erfolgt derart, dass jede Antenne beispielweise für die Dauer von einem Drittel der minimalen Dauer eines Sendesignales zugeschaltet wird. Die Auswerteeinrichtung 5 misst in jedem Intervall die Amplitude des Signales von der gerade angeschalteten Antenne, und am Ende eines Zyklus werden die gemessenen Amplituden von den drei Antennen linear oder vektoriell addiert. Die weitere Verarbeitung durch die nachfolgende Schwellwertschaltung 6 und das Ausgabemittel 7 erfolgt in gleicher Art und Weise, wie diese für die erste Ausführung beschrieben wurde.

In einer dritten Ausführung gemäss Figur 3 werden die Signale von den einzelnen Antennen 1 je einem separaten Empfänger 2, 3, 4 zugeführt. Die Auswerteeinrichtung 5 misst die Amplituden der Signale von jedem der drei Empfänger. Die gemessenen Werte werden linear oder vektoriell addiert. Die weitere Verarbeitung durch die nachfolgende Schwellwertschaltung 6 und das Ausgabemittel 7 erfolgt in gleicher Art und Weise, wie diese für die erste Ausführung beschrieben wurde.

## Patentansprüche

1. Vorrichtung zur Erkennung des Betriebszustandes Senden eines Lawinenverschütteten-Suchgerätes, **dadurch gekennzeichnet, dass** das Signal von mindestens einer Antenne mindestens einem Empfänger zugeführt wird, dessen Empfindlichkeit derart eingestellt ist, dass nur die Signale von Sendern in der unmittelbaren Umgebung zur nachfolgenden Auswerteeinheit gelangen, welche die Amplitude von mindestens einem Ausgangssignal eines Empfängers misst, und dass der Auswerteeinheit eine Schwellwertschaltung nachgeschaltet ist, welche aufgrund einer Bewertung der Amplitude des Signales den Zustand eines Signalisierungsmittels verändert.

2. Vorrichtung nach Anspruch 1, **dadurch gekennzeichnet, dass** bis zu drei Antennen rechtwinklig zueinander angeordnet sind.

3. Vorrichtung nach Anspruch 1 und 2, **dadurch gekennzeichnet, dass** die Signale von zwei Antennen dem Empfänger zugeführt werden.

4. Vorrichtung nach Anspruch 1 und 2, **dadurch gekennzeichnet, dass** die Signale von drei Antennen dem Empfänger zugeführt werden.

5. Vorrichtung nach Anspruch 1, 2, 3 und 4, **dadurch gekennzeichnet, dass** das Signal von einer ersten Antenne um null Grad phasenverschoben wird, und dass das Signal von einer zweiten Antenne um sechzig Grad phasenverschoben wird, und dass das Signal von einer dritten Antenne um einhundertundzwanzig Grad phasenverschoben wird.

6. Vorrichtung nach Anspruch 1, 2, 3, 4 und 5, **dadurch gekennzeichnet, dass** die phasenverschobenen Signale addiert werden, bevor sie einem Empfänger zugeführt werden.

7. Vorrichtung nach Anspruch 1, 2, 3 und 4, **dadurch gekennzeichnet, dass** die Signale von den einzelnen Antennen in zeitlich gestaffelter Folge dem Empfänger zugeführt werden.

8. Vorrichtung nach Anspruch 1, 2, 3, 4 und 7, **dadurch gekennzeichnet, dass** die Messwerte der Amplituden der zeitlich gestaffelten Signale am Ende einer Staffel durch die Auswerteeinrichtung linear addiert werden, bevor sie der Schwellwertschaltung zugeführt werden.

9. Vorrichtung nach Anspruch 1, 2, 3, 4 und 7, **dadurch gekennzeichnet, dass** die Messwerte der Amplituden der zeitlich gestaffelten Signale am Ende einer Staffel durch die Auswerteeinrichtung vektoriell addiert werden, bevor sie der Schwellwertschaltung zugeführt werden.

10. Vorrichtung nach Anspruch 1, 2, 3 und 4, **dadurch gekennzeichnet, dass** die Signale von den einzelnen Antennen je einem separaten Empfänger zugeführt werden.

11. Vorrichtung nach Anspruch 1, 2, 3, 4 und 10, **dadurch gekennzeichnet, dass** die Signale von den separaten Empfängern der Auswerteeinheit zugeführt werden, und dass diese Signale durch die Auswerteeinheit linear addiert werden, bevor sie der Schwellwertschaltung zugeführt werden.

12. Vorrichtung nach Anspruch 1, 2, 3, 4 und 10, **dadurch gekennzeichnet, dass** die Signale von den separaten Empfängern der Auswerteeinheit zugeführt werden, und dass diese Signale durch die Auswerteeinheit vektoriell addiert werden, bevor sie der Schwellwertschaltung zugeführt werden.

13. Vorrichtung nach Anspruch 1, **dadurch gekennzeichnet, dass** der Schwellwert für die Entscheidung über die Veränderung des Zustandes des Signalisationsmittels einstellbar ist.

14. Vorrichtung nach Anspruch 1 und 13, **dadurch gekennzeichnet, dass** der Zustand des Signalisationsmittels erst nach mehrmaliger Überschreitung des Schwellwertes verändert wird.

15. Vorrichtung nach Anspruch 1, 13 und 14, **dadurch gekennzeichnet, dass** die Anzahl der Schwellwert-Überschreitungen, welche zu einer Veränderung des Zustandes des Signalisationsmittels führen, einstellbar ist.
